# EUROPEAN PATENT SPECIFICATION

(11) **EP 1 912 065 B1**
(45) Date of publication and mention of the grant of the patent: **18.02.2015**
(21) Application number: 06782218.9
(22) Date of filing: 27.07.2006
(51) Int. Cl.: G01N 30/88, G01N 27/62, G01N 30/04, G01N 30/26, G01N 30/72

(54) **Method for analysis of albumin in sample solution**
Verfahren zur Analyse von Albumin in einer Probenlösung
Méthode pour analyser l'albumine dans un prélèvement en solution

(30) Priority: 27.07.2005 JP 2005217993
(43) Date of publication of application: 16.04.2008
(73) Proprietor: AJINOMOTO CO., INC., Chuo-ku Tokyo 104-8315 (JP)
(72) Inventor: KUBOTA, Kazuyuki, Kawasaki-shi Kanagawa 210-8681 (JP); YAMADA, Naoyuki, Kawasaki-shi Kanagawa 210-8681 (JP); TAKEHANA, Kenji, Kawasaki-shi Kanagawa 210-8681 (JP); KAWAKAMI, Asami, Kawasaki-shi Kanagawa 210-8681 (JP); NAKAYAMA, Akira, Kawasaki-shi Kanagawa 210-8681 (JP)
(74) Representative: Nicholls, Kathryn Margaret
(86) International application number: PCT/JP2006/315358
(87) International publication number: WO 2007/013679

(56) References cited:
- JP-A- 61 155 397
- JP-A- 2003 139 751
- LIANG H ET AL: "Determination of albumin and myoglobin in dialysate and ultrafiltrate samples by high-performance size-exclusion chromatography" JOURNAL OF CHROMATOGRAPHY B : BIOMEDICAL APPLICATIONS, vol. 754, no. 1, 15 April 2001 (2001-04-15), pages 141-151, XP004232000 ELSEVIER SCIENCE PUBLISHERS, NL ISSN: 0378-4347 DOI: 10.1016/S0378-4347(00)00600-9
- HAYASHI T ET AL: "Observation for redox state of human serum and aqueous humor albumin from patients with senile cataract" PATHOPHYSIOLOGY, vol. 6, no. 4, February 2000 (2000-02), pages 237-243, XP002611011 ISSN: 0928-4680 DOI: 10.1016/S0928-4680(99)00022-X
- MIKSIK I ET AL: "Post-translational non-enzymatic modification of proteins II. Separation of selected protein species after glycation and other carbonyl-mediated modifications" JOURNAL OF CHROMATOGRAPHY B: BIOMEDICAL SCIENCES & APPLICATIONS, vol. 699, no. 1-2, 10 October 1997 (1997-10-10), pages 311-345, XP004095002 ELSEVIER, AMSTERDAM, NL ISSN: 1570-0232 DOI: 10.1016/S0378-4347(97)00233-8
- BECK J L ET AL: "Direct observation of covalent adducts with Cys34 of human serum albumin using mass spectrometry" ANALYTICAL BIOCHEMISTRY, vol. 325, no. 2, 15 February 2004 (2004-02-15), pages 326-336, XP002611012 ISSN: 0003-2697 DOI: 10.1016/J.AB.2003.10.041
- KATO Y. ET AL.: 'Separation of Human Serum Proteins by High-Speed Gel Filtration on TSK-GEL G300SWG' JOURNAL OF HRC & CC vol. 3, no. 3, 1980, page 145, XP003007624
- BOTTING C.H.: 'The use of the slow crystallisation method to improve matrox-assisted laser desorption/ionization time-of-flight signals for larger proteins' RAPID COMMUNICATION IN MASS SPECTROMETRY vol. 14, no. 21, 2000, pages 2030 - 2033, XP003007625
- WANG H.L., ZOU H.F., ZHANG Y.K.: 'Determination of Drug-Protein Interactions by Combined Microdialysis and High-Performance Liquid Chromatography' CHROMATOGRAPHIA vol. 44, no. 3-4, 1997, pages 205 - 208, XP003007626
- WANG H., ZOU H., ZHANG Y.: 'Multi-Site Binding of Fenoprofen to Human Serum Albumin Studied by a Combined Technique of Microdialysis with High Performance Liquid Chromatography' BIOMEDICAL CHROMATOGRAPHY vol. 12, no. 1, 1998, pages 4 - 7, XP003007627
- CABRERA-CRESPO J., ET AL.: 'Albumin purification from human placenta' BIOTECHNOLOGY AND APPLIED BIOCHEMISTRY vol. 31, no. PART 2, April 2000, pages 101 - 106, XP003007628
- SOGAMI M. ET AL.: 'High-Performance Liquid Chromatographic Studies On Non-Mercapt Mercapt Conversion Of Human Serum Albumin II' JOURNAL OF CHROMATOGRAPHY vol. 332, 20 September 1985, pages 19 - 27, XP003007629
- WATANABE A.: 'Kessei Albumin no Tayosei to sono Rinshoteki Igi' PHARM MEDICA, NEN 3 GATSU 10 HAKKO vol. 19, no. 3, 2001, pages 195 - 204, XP003007630
- KANO M. ET AL.: 'Sanka Stress ni yori Yudo sareru Naibunpitsu Kino Hanka ni Taisuru Shojusen no Eikyo' DOKKYO JOURNAL OF MEDICAL SCIENCES, NEN 3 GATSU 25 NICHI HAKKO vol. 31, no. 1, 2004, pages 91 - 97, XP003007631
- MURAMOTO Y.: 'Kessei Albumin Sokuteiho no Kongo no Tenbo' THE TOKYO JOURNAL OF MEDICAL TECHNOLOGY, NEN 7 GATSU 1 NICHI HAKKO vol. 29, no. 4, 2001, pages 277 - 285, XP003007632
- SHINADA M.: 'Yuri Shibosan Ketsugo yori Kento shita Soki Tonyobyosei Jinsho ni Okeru Nyochu Biryo Albumin no Kaiseki' JOURNAL OF TOKYO WOMEN'S MEDICAL UNIVERSITY, NEN 8 GATSU 25 NICHI HAKKO vol. 63, no. 8, 1993, pages 709 - 716, XP003007633
- UEMURA Y.: 'Albumin no Lot-Sa to Biryo Albumin Hyohin no Sakusei' CLINICAL TESTING, NEN 5 GATSU 15 NICHI HAKKO vol. 48, no. 5, 2004, pages 557 - 561, XP003007634

## Description

### Technical Field

The present invention relates to a method of analyzing albumin in a sample solution by mass spectrometry or liquid chromatography. More particularly, the present invention relates to a method of analyzing albumin in a sample solution, which is characterized by a pretreatment method of the sample solution before applying to mass spectrometry or liquid chromatography, and a method of accurately and stably analyzing amount of oxidized albumin and reduced albumin in a sample solution and a presence ratio thereof.

### Background Art

Albumin is a protein widely distributed in living bodies in a highest amount. Human albumin is a simple protein consisting of 585 amino acids, and having a molecular weight of 66 kDa and 17 disulfide bonds and single free cysteine residue in a molecule. Albumin is produced in the liver and secreted into blood. Albumin occupies about 60% of the protein present in total plasma, and is known to exhibit physiology including (1) control and maintenance of plasma osmotic pressure, (2) transport of bilirubin, amino acid, fatty acid, hormone, metal ion, drug and the like, (3) amino acid source under malnutrition, (4) redox buffering ability, and the like. Particularly, the bond between a drug and albumin is deeply involved in the efficacy expression of the drug. As described, albumin is a protein having various functions.

Reduced and oxidized albumin, glycated albumin and the like are known to be present heterogeneously in albumin within the living body. In particular, progress of albumin glycation is generally reported in diabetes (Suzuki E., Diabetes Res. 18(3), 153-158, 1992), and glycated albumin formed by glucose binding is drawing attention as a marker for monitoring of blood glucose level, like hemoglobin A1c in diabetes clinical situations.

On the other hand, the presence of reduced albumin (Alb(red)) and oxidized albumin (Alb(ox)) within the living body is also known be involved in diseases in the living body and is recently attracting attention. It is known that Alb(red) wherein a SH group of the 34th cysteine from the N-terminus is free, and Alb(ox) wherein a sulfur-containing in vivo compound such as cysteine and the like is added via a disulfide bond to the SH group of the 34th cysteine is known to be present in blood (Era S, Int. J. Peptide Protein Res. 31, 435-422, 1988).

Since the disulfide bond can be reversibly formed and dissociated from in a short time, Alb(red) and Alb(ox) are in dynamic equilibrium in vivo. Accordingly, the presence ratio of Alb(red) and Alb(ox) in plasma reflects the redox state in blood. That is, when some oxidative stress is applied, the presence ratio of Alb(ox) increases. Specifically, Alb(ox) is known to increase in elderly persons, and patients with nephrosis syndrome, dialysis, hepatic diseases and the like (Sogami M., J. Chromatogr., 332, 19-27, 1985; Akiharu Watanabe), Phama Medica, 19, 195-204, 2001; Suzuki E, Diabetes Res Clin Pract, 18, 153-158, 1992). In addition, diabetic patients are considered to be under an oxidative stress in view of increased blood oxidative products, decreased antioxidant enzyme activity, and formation of a free radical relating to a microvascular damage (Oberley LW, Free Radical Biol. Med., 5, 113-124, 1988).

The state of oxidative stress is an unpreferable state where oxidation reaction and antioxidation reaction in a living body are imbalanced and oxidation reaction prevails. It is said that cellular DNA, phospholipid on cellular membrane, protein and carbohydrates are damaged due to an oxidative stress, angiopathy advances, and health condition is aggravated. In this way, the oxidative stress is said to cause aging and various diseases, and it is known that substances having an antioxidant effect such as polyphenol and the like are good for the health. Accordingly, once easy monitoring of an oxidized condition in vivo is made possible, monitoring of health conditions, and screening for drugs and health materials are enabled.

Cirrhosis is known as one of the representative diseases in which oxidized albumin increases. In cirrhosis patients, blood albumin level decreases since albumin producibility of the liver is degraded. For treatment of hypoalbuminemia, human plasma albumin preparations and branched chain amino acid preparations are used. In hepatic diseases such as cirrhosis and the like, a decrease in the albumin level as well as an increase in oxidized albumin are observed (Watanabe A, Netrition 20, 351-357, 2004).

Moreover, fluctuation of redox balancing due to an oxidative stress also occurs by impairment of renal function (Terawaki H., Kidney Int. 65(5), 1988-1993, 2004), diabetes (Suzuki E., Diabetes Res. 18(3), 153-158, 1992), rheumatism (Narazaki R., Arch. Toxicol. 14, 351-353, 1998), aging (Era S., Biochim. Biophys. Acta., 1247(1), 12-16, 1995) and the like.

In this way, albumin exhibits redox buffering ability in a living body by forming a reductant oxidant by itself. Accordingly, the presence ratio of oxidized albumin and reduced albumin is considered to reflect the redox state of a living body. Therefore, once an in vivo reduced oxidized albumin ratio of the blood can be accurately determined, the progress of, a therapeutic effect on a disease caused by an oxidative stress, or health condition can be monitored sensitively. In other words, once an in vivo oxidized/reduced albumin ratio of the blood can be easily determined, the degree of progress and a therapeutic effect on a disease, or health condition can be easily monitored.

There are several methods for determining the ratio of Alb(red) and Alb(ox). One of them utilizes a dye-binding method used for quantitation of albumin. As the dye to be used for the dye-binding method, used are two kinds: bromcresol green (BCG) and bromcresol purple (BCP). Since the BCP method shows different reactivities on Alb(red) and Alb(ox), the difference in the albumin quantitative values determined by the BCP method and the BCG method is considered to reflect the presence ratio of Alb(ox). However, this method is markedly poor in the quantitativity.

In addition, there is a method for quantifying an Alb(red)-derived SH group using a free SH group quantitative reagent such as Ellman's Reagent and the like (Sogami M, Int. Pept. Protein Res., 24(2), 96-103, 1984). However, this method fails to distinguish a substance having an SH group, which is other than albumin.

Currently, most superior method is one using high performance liquid chromatography (HPLC) (Sogami M., J. Chromatogr., 332, 19-27, 1985; JP-A-61-155397; JP-B-2-4863). In the analysis of serum albumin using HPLC, reduced albumin (Alb(red)) and oxidized albumin (Alb(ox)) can be separately detected. The ratio of Alb(red) amount to the total amount of Alb(red) and Alb(ox) (Alb(red)%= peak area of Alb(red)/peak area of (Alb(red) + peak area of Alb(ox)) × 100) can be determined from the peak area ratio on the separated chromatogram.

However, the current HPLC method has some problems. A first problem is the stability of a sample. Since reduced albumin in plasma is highly unstable, oxidized albumin increases due to natural oxidation even under preserved condition at -20°C and Alb(red) % value decreases. This reaction is in parallel to the temperature rise. Accordingly, it is said that plasma should be preserved at -70°C or below (Ryozo Muramoto, Igaku no Ayumi, 198(13), 972-976, 2001). For measurement by the HPLC method, the plasma preserved at -70°C or below should be thawed and immediately thereafter applied to the HPLC measurement. A second problem is insufficient separation of Alb(red) and Alb(ox). Since Alb(red) and Alb(ox) have a very small structural difference, it is extremely difficult to completely separate them by HPLC, and baseline separation on a chromatogram is unattainable (Keiko Yasukawa, Rinsyou Kensa, 44(8), 907-910, 2000). A third problem is poor structural information of oxidized albumin. In Alb(ox), a sulfur-containing compound such as cysteine, glutathione and the like is bonded at the 34th residue cysteine from the N-terminus of albumin via a disulfide bond. The structure of Alb(ox) detected by the HPLC method cannot be specifically known by the HPLC method.

Recently, an analysis method of albumin using a mass spectrometer was reported as a method with a potential of solving the above-mentioned second and third problems (Keiko Yasukawa, Rinsyou Kensa, 44(8), 907-910, 2000). The progress of mass spectrometry is remarkable in recent years, and it is becoming possible to measure even a protein having a large molecular weight with high accuracy and high mass resolution. Alb(ox) is heavier than Alb(red) by the mass of the added compound (for example, cysteine). Accordingly, Alb(red) and Alb(ox) can be separately detected by measuring with a mass spectrometer having sufficient mass resolution. In the above-mentioned literature, Yasukawa et al. measured albumin of healthy subjects and diabetes patients with an electrospray ionization mass spectrometer (ESI-MS), detected Alb(red) and Alb(ox), and further detected glycated albumin.

However, the above-mentioned first problem is still a serious problem as ever also for the ESI-MS method. Since the ratio of oxidized albumin in plasma increases during preservation when the temperature is not -70°C or below, preservation of sample is difficult. Moreover, since the ratio of oxidized albumin constantly increases from thawing to measurement of freeze-preserved plasma, fluctuation of measurement values occurs. Accordingly, by a conventional method, a plasma preserved at -70°C or below should be thawed and immediately thereafter subjected to the HPLC measurement or ESI-MS measurement. The time and room temperature up to the measurement cause variation in the Alb(red) % value. Furthermore, since a standard substance to enhance accuracy of the analysis cannot be preserved stably, control of the accuracy of the analysis is extremely difficult. In addition, automatic analysis using an auto injector and automation labor saving of measurement are difficult. Therefore, the measurement of the presence ratio of reduced albumin and oxidized albumin is not generally prevailing, but practiced only in particular research institutions. Further, while the serum albumin quantitation in current use is mainly a dye-binding method, accurate quantification is problematically unavailable due to the reaction difference of oxidized and reduced albumins (Ryozo Muramoto, Rinsyou Kensa, 48(5), 537-544, 2004).

In analyses in general, standard samples are important to ensure accuracy and precision of analyses. Oxidized albumin is prepared in a test tube by a method including reaction with a compound having a thiol group such as cysteine, glutathione and the like (Gabaldon M., Arch. Biochem. Biophys. 431, 178-188, 2004). However, as mentioned above, since this reaction is reversible, a problem occurs in that oxidized albumin is easily converted to reduced albumin. Accordingly, a standard sample showing a constant ratio of the oxidized and reduced albumins for a long time has been desired to perform an analysis with high accuracy.

### Disclosure of the Invention

The present inventors have conducted intensive studies and found that albumin is stabilized by adjusting pH of a sample solution to a particular range, and diluting a sample at a ratio within a particular range to give a dilute solution, and, optionally, by removing low-molecular compounds by a chromatography method such as affinity chromatography, gel filtration chromatography and the like, or ultrafiltration and the like, which affords marked suppression of oxidization of reduced albumin in the sample solution, and enabled a far stabler albumin measurement with high analysis accuracy as compared to conventional methods by applying the stabilized solution to mass spectrometry or liquid chromatography directly or after filtration, which resulted in the completion of the present invention.

Accordingly, the gist of the present invention is as follows.
[1] A method of analysing the amount of reduced albumin and oxidized albumin and/or presence ratio of reduced albumin and oxidized albumin in a sample of blood or plasma from a test subject, the method comprising diluting the sample 50- to 100000- fold with a buffer thereby to obtain a sample solution having a pH of 4-9 and subjecting the solution to mass spectrometry or liquid chromatography.
[2] The method of [1], which comprises incubating the sample solution for 0 - 100 hr, adjusting the pH thereof and subjecting the diluted sample solution to mass spectrometry or liquid chromatography.
[3] The method of [1] or [2], wherein the buffer is at least one kind selected from the group consisting of phosphate buffer, Tris-HCl buffer, borate buffer, citrate buffer, acetate buffer, carbonate buffer, HEPES buffer and succinate buffer.
[4] The method of [2], wherein the incubation temperature is 4 - 60°C.
[5] The method of any one of [1] to [4], which comprises an ultrafiltration treatment before mass spectrometry or liquid chromatography.
[6] The method of any one of [1] to [5], which comprises purification by chromatography before mass spectrometry or liquid chromatography.
[7] The method of [6], wherein the chromatography is at least one kind selected from the group consisting of high performance liquid chromatography, reversed phase chromatography, normal phase chromatography, affinity chromatography, ion exchange chromatography, gel filtration chromatography and hydrophobic chromatography.
[8] The method of any one of [1] to [7], wherein the mass spectrometry is performed using at least one kind of apparatus selected from the group consisting of an electrospray ionization time-of-flight mass spectrometer, a quadrupole mass spectrometer, an ion trap mass spectrometer, a Fourier transform ion cyclotron mass spectrometer, a matrix-assisted laser desorption-ionization time-of-flight mass spectrometer, a magnetic sector-type mass spectrometer and a tandem quadrupole mass spectrometer.
[9] The method of any one of [1] to [8], wherein the sample is from a test subject in at least one state or feared to be in at least one state selected from the group consisting of a hepatic disease, a renal disease, diabetes, rheumatism, encephalopathy, fatigue, aging, oxidative stress, a cardiac disease and a lung disease.
[10] A method of analyzing blood or plasma from a test subject in at least one state or feared to be in at least one state selected from the group consisting of a hepatic disease, a renal disease, diabetes, rheumatism, encephalopathy, fatigue, aging, oxidative stress, a cardiac disease and a lung disease, which comprises analyzing, by the method of any one of [1] to [8], amount of reduced albumin and oxidized albumin and/or presence ratio of reduced albumin and oxidized albumin in blood or plasma taken from the test subject.
[11] A method of screening a test substance, comprising measuring, by the method of any one of [1] to [8], amount of reduced albumin and oxidized albumin and/or presence ratio of reduced albumin and oxidized albumin in a sample of a test subject with or without administration of a test substance,
   comparing the amount and/or presence ratio obtained with administration of a test substance and the amount and/or presence ratio obtained without administration of a test substance, and
   selecting a sample showing a greater amount and/or presence ratio of reduced albumin with administration of test substance as compared to non-administration thereof.
[12] The method of [11], wherein the test substance is an antioxidant.

### Brief Description of the Drawings

Fig. 1 shows a calculation method of Alb(red) % value in Example 1.
Fig. 2 is a graph showing the time course of Alb(red) % value when the rat-derived sample solution was adjusted to pH 6 (Example 1).
Fig. 3 is a graph showing the time course of Alb(red) % value when the human-derived sample solutions were adjusted to various pHs (Example 1).
Fig. 4 is a graph showing the time course of Alb(red) % value when the rat-derived sample solutions have various dilution rates (Example 1).
Fig. 5 is a graph showing the time course of Alb(red) % value when the human-derived sample solutions have various dilution rates (Example 1).
Fig. 6 is a graph showing the results of Example 2.
Fig. 7 is a chromatogram showing the results of Example 3.

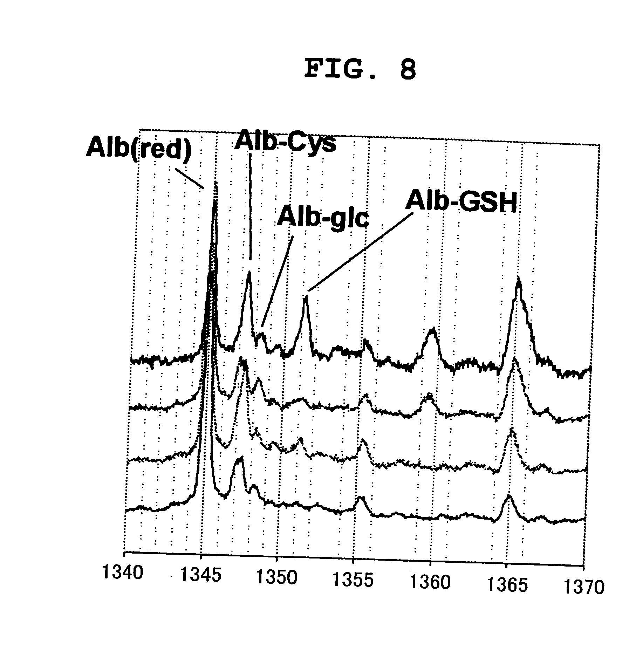

Fig. 8 is a mass spectrum showing the results of Example 4. The data shown from the top are the data obtained when the plasma of a diabetes model mouse after freeze-thawing was incubated at 37°C for 2 hr, the data obtained when the plasma of a diabetes model mouse after freeze-thawing was not incubated thereafter, the data obtained when the plasma of a normal model mouse after freeze-thawing was incubated at 37°C for 2 hr, and the data obtained when the plasma of a normal model mouse after freeze-thawing was not incubated thereafter. Alb-Cys refers to the peak of a cysteine-added oxidized albumin, Alb-GSH refers to the peak of glutathione-added oxidized albumin, and Alb-glc refers to the peak of glycated albumin.
Fig. 9 is a graph showing the results of Example 5.
Fig. 10 is a graph showing the results of Example 6.
Fig. 11 is a graph showing the results of Example 8.
Fig. 12 is a chart showing the results of HPLC-ESI-TOFMS measurement in Example 9.

### Detailed Description of the Invention

The albumin analysis method of the present invention is characterized by adjusting a sample solution to pH 4 - 9 before subjecting the sample solution to mass spectrometry or liquid chromatography. More preferably, the sample solution is adjusted to pH 5.8 - 6.2. In a case where the pH of the sample solution is less than 4 or more than 9, it is difficult to analyze albumin with stability, because oxidization of reduced albumin to oxidized albumin is promoted even during the preparation of the sample solution.

Examples of the method for adjusting pH include dissolution in a buffer, addition of a weak acidic solution or weak basic solution and the like.

Of these, adjusting pH with a buffer is preferable since the below-mentioned dilution can be performed simultaneously. Examples of the buffer to be used include conventional buffers such as phosphate buffer, Tris-HCl buffer, borate buffer, citrate buffer, acetate buffer, carbonate buffer, HEPES hydrochloride buffer, succinate buffer and the like. Particularly preferred are citrate buffer and phosphate buffer.

The present invention is particularly suitable for the analysis of a blood or plasma sample taken from a test subject.

In the present invention, for monitoring of the balance between oxidation and reduction of a sample, it is preferable to incubate, prior to the pH adjustment or dilution, or prior to an ultrafiltration or chromatography treatment when such is applied, the blood or plasma sample for 0-100 hr, preferably 2-12 hr, to promote the oxidation reaction of reduced albumin. This incubation further clarifies the difference in the amount and/or the presence ratio of reduced albumin and oxidized albumin in the sample, thereby enabling more convenient monitoring of the balance between oxidation and reduction in the sample.

The incubation temperature is, for example, 4 - 60°C, preferably 25 - 40°C.

The sample solution used is, the solution obtained by diluting a sample 50- to 100000-fold with a dilution solvent. When the dilution rate is smaller than 50-fold, the conversion rate of reduced albumin to oxidized albumin becomes high since contact frequency of low-molecular compounds and reduced albumin is high. In this case, moreover, when a buffer is used as a dilution solution, the pH buffering ability of the buffer is impaired. On the other hand, when the dilution rate is greater than 100000-fold, the albumin concentration may be lower than the detection limit of the apparatus. In this case, however, it becomes possible to detect by increasing the injection amount of the sample to compensate for the greater dilution ratio.

Examples of the dilution solvent include buffer, water, acetonitrile, methanol, formic acid solution and the like. As mentioned above, buffer is preferable since pH can also be adjusted simultaneously. Examples of the buffer include those exemplified for the adjustment of pH. Of those, phosphate buffer is particularly preferable.

To suppress oxidation reaction of albumin, it is preferable to remove low-molecular compounds that may be contained in the sample.

Examples of the method for removing the low-molecular compounds include an ultrafiltration treatment, and purification by chromatography such as high performance liquid chromatography, reversed phase chromatography, normal phase chromatography, affinity chromatography, ion exchange chromatography, gel filtration chromatography, hydrophobic chromatography and the like.

Of these, the purification by affinity chromatography using an affinity column having high albumin adsorption capacity is preferable. A sample is applied to an affinity column to allow absorption of albumin in the sample to a column resin. The inside of the column is washed with phosphate buffer while keeping the albumin adsorbed thereon, whereby low-molecular compounds are removed. After completion of the washing, a phosphate buffer having a high salt concentration is flown through the column as an albumin eluent. As a result, albumin is released from the resin, and a sample free of low-molecular compounds is obtained.

As used herein, the low-molecular compounds means a compound having a molecular weight of not more than 2,000, preferably not more than 1,000, and more preferably not more than 500. Examples of the compound include amino acid, organic acid, saccharides, fatty acid, lipid, nucleic acid, nucleotide, nucleoside, metal ion, steroid compound, peptide and the like, which have a molecular weight of not more than the above-mentioned molecular weights. More specifically, cysteine, cystine, homocysteine, homocystine, reduced glutathione and oxidized glutathione can be mentioned.

When ultrafiltration is performed, the pore size of a filtration filter is generally used molecular weight cut 1000 Da - 60000 Da, and preferably, a filter having a pore size of 10000 Da - 30000 Da is used.

While low-molecular compounds are generally removed immediately before mass spectrometry or liquid chromatography, it is also possible to remove them in advance using a gel-inclusion collection instrument, or a pH adjustment dilution solvent-inclusion collection instrument, during collection of a sample such as blood, plasma and the like. For example, since a blood collection tube of Biopool for a plasminogen activator assay (US Patent No. 5175087) uses a citrate buffer, the use thereof enables pH adjustment during blood sample collection and stabilization of albumin.

In addition, it is preferable to perform purification by chromatography or use LC-MS before mass spectrometry measurement, thereby to prevent a peak from arising due to contaminants other than albumin.

Examples of the chromatography include those exemplified for the aforementioned removal of the low-molecular compounds. Of these, reversed phase high performance liquid chromatography that can be connected to mass spectrometry with ease as LC-MS is preferable.

Reduced albumin in the blood or plasma is highly unstable. When a sample solution is blood (whole blood), therefore, a cryotreatment is generally unpreferable, because the freezing causes destruction of red blood cells and hemoglobin in the red blood cells affects the measurement. Thus, it is advantageous to perform pH adjustment or dilution immediately after blood collection, preferably an ultrafiltration treatment thereafter, and apply the blood to a measurement apparatus. Use of a pH adjustable collection tube (e.g., a blood collection tube enclosing a dilution solvent for pH adjustment), and the like is more preferable. When a sample solution is plasma, the plasma may be separated after blood collection, rapidly frozen using liquid nitrogen and cryopreserved at -70°C or lower.

The above-mentioned pH adjustment, dilution, ultrafiltration and chromatography may be performed prior to cryopreservation of a plasma sample. Alternatively, they may be performed after thawing a cryopreserved plasma sample rather than prior to the preservation. It is also possible to treat the sample in advance using a gel-inclusion collection utensil, or a pH adjustment dilution solvent-inclusion collection utensil, before cryopreservation or during collection of blood. As a result, the sample can be preserved stably for a long time even at a high preservation temperature.

Examples of the mass spectrometers usable in the present invention include an electrospray ionization-time-of-flight mass spectrometer (ESI-TOFMS), a quadrupole mass spectrometer, an ion trap mass spectrometer, a Fourier transform ion cyclotron mass spectrometer, a matrix-assisted laser desorption/ionization-time-of-flight mass spectrometer (MALDI-TOFMS), a magnetic sector-type mass spectrometer, a tandem quadrupole mass spectrometer and the like. Of these, ESI-TOFMS is preferable from the aspects of simplicity, high mass resolution capability and high sensitivity.

According to the albumin analysis method of the present invention, amount of reduced albumin and oxidized albumin and/or presence ratio of reduced albumin and oxidized albumin, the presence or absence of glycated albumin, identification of oxidized albumin present in several kinds, and the like can be analyzed for a sample solution.

In the present invention, the reduced albumin means an albumin wherein a free cysteine residue at the 34th position from the N-terminus is not modified.

In the present invention, the oxidized albumin means an albumin wherein a thiol compound other than albumin in the living body is bonded to a free cysteine residue at the 34th position from the N-terminus via a disulfide bond.

By analyzing, by the albumin analysis method of the present invention, amount of reduced albumin and oxidized albumin and/or presence ratio of reduced albumin and oxidized albumin in blood or plasma taken from a test subject in a state or feared to be in at least one state selected from the group consisting of a hepatic disease, a renal disease, diabetes, rheumatism, encephalopathy, fatigue, aging, oxidative stress, a cardiac disease and a lung disease, whether or not the test subject is in a state selected from the group consisting of a hepatic disease, a renal disease, diabetes, rheumatism, encephalopathy, fatigue, aging, oxidative stress, a cardiac disease and a lung disease can also be determined.

Examples of the test subject, from whom a blood or plasma sample can be collected, include mammals (e.g., mouse, rat, hamster, rabbit, cat, dog, bovine, sheep, monkey, human and the like).

The conditions of hepatic disease, renal disease, diabetes, rheumatism, encephalopathy, fatigue, aging, oxidative stress, cardiac disease, lung disease and the like are known to produce an oxidative stress, and they are diseases causing disturbance in the balance between oxidation and reduction of a test subject. That is, when a test subject falls into these conditions, the ratio of oxidized albumin relative to the total amount of oxidized albumin and reduced albumin in the test subject increases. Therefore, by analyzing the ratio of oxidized albumin, whether or not the test subject has fallen into these diseases or conditions can be determined.

Examples of the hepatic disease include hepatitis C, hepatitis B, cirrhosis, hepatic encephalopathy, primary biliary cirrhosis, liver cancer and the like.

Examples of the renal disease include renal failure, glomerulonephritis, nephrosis syndrome, pyelonephritis and gout kidney.

Examples of the encephalopathy include cerebral apoplexy, cerebral infarction, hepatic encephalopathy, subarachnoid hemorrhage and the like.

Examples of the cardiac disease include angina pectoris, myocardial infarction, arrhythmia, congenital cardiac disease and the like.

Examples of the lung disease include pneumonia, emphysema, asthma, bronchitis and the like.

Using the albumin analysis method of the present invention, a test substance can also be screened for with the amount of reduced albumin and oxidized albumin and/or the presence ratio of reduced albumin and oxidized albumin as an index. The screening includes; measuring, by the albumin analysis method of the present invention, amount of reduced albumin and oxidized albumin and/or presence ratio of reduced albumin and oxidized albumin in a test subject with or without administration of a test substance; comparing the amount and/or presence ratio obtained with administration of a test substance and the amount and/or presence ratio obtained without administration of a test substance; and selecting a test subject showing a greater amount and/or presence ratio of reduced albumin with administration of test substance as compared to non-administration thereof.

Examples of the test substance include various drugs and health materials such as antioxidant, albumin-binding substance, etc., and the like. As used herein, the health materials mean food materials having effects for maintenance or improvement of health and foods containing the same. Examples of the drug include prophylactic or therapeutic drugs for hepatic disease, renal disease (particularly nephrosis syndrome), diabetes, cardiac disease and aging, and the like. In addition, examples of the health materials include nutrient sources/nutritious supplements such as antioxidant, vitamin, amino acid, mineral, carbohydrate, fatty acid, enzyme, etc., and the like.

A test substance showing a greater amount of reduced albumin by about 0.1 mg/mL, preferably about 0.2 mg/mL, by administration of the test substance as compared to non-administration thereof can be a candidate for a useful drug or health material. In the case of the presence ratio, a test substance showing a greater presence ratio of reduced albumin to the total albumin of not less than 2%, preferably not less than 3%, more preferably not less than 5%, by administration of the test substance as compared to non-administration thereof can be a candidate for a useful drug or health material.

The pretreatment method of a sample solution used in the albumin analysis method of present invention can markedly suppress the oxidation reaction of albumin in the blood or plasma, by pH adjustment and dilution and, optionally, removal of low-molecular compounds by ultrafiltration and chromatography. As a result, preservation management and transport management become markedly easy. Moreover, the albumin analysis method of the present invention utilizing the pretreatment method suppresses an influence of natural oxidation of albumin on the measurement results as much as possible as compared to the conventional HPLC method, and affords stable Alb(red) % values. Furthermore, use of the albumin analysis method of the present invention realizes accurate albumin quantification, unlike the conventional serum albumin quantification methods.

In the present invention, mass spectrometry or liquid chromatography is used as an analysis method. Particularly, an analysis by LC-MS is more effective in terms of sensitivity, selectivity and detection method. When mass spectrometry is used, measurement is possible with a minimum of about 0.2 nL of a sample to be used for one measurement, as compared to 10 µL for conventional HPLC methods. In addition, since mass spectrometry is generally high sensitive as compared to liquid chromatography, sufficient dilution of a sample solution is possible, which facilitates setting of pH to fall within a particular range and permits a higher dilution ratio, and the like, thereby reducing contact frequency of Alb(red) with a reactive compound in the sample solution. Here, the selectivity refers to that of Alb(red) and Alb(ox). When mass spectrometry is used, since selectivity thereof is higher than that of liquid chromatography, baseline separation can be accomplished for Alb(red) and Alb(ox). Furthermore, when mass spectrometry is used, since the detection is based on m/z values, the structure information can be obtained as necessary from the peak on the mass spectrum, in addition to the Alb(red) % values.

Albumin is highly unstable and, as the incubation time passes, oxidized albumin increases due to natural oxidation. In fact, when sample solutions obtained by incubating plasma for a given time, adjusting its pH and diluting same are subjected to mass spectrometry or liquid chromatography, the rate of change of Alb(red) % varies depending on the samples. That is, albumin plays a role of a probe that reflects the redox state of plasma.

One of the approaches of drug discovery methods is search and research centering on the large-scale combinatorial synthesis. The method of the present invention affords convenient and rapid screening of a drug effect because it is highly convenient, permits a rapid measurement of 35 min measurement time per sample, and enables automatic analysis by an auto injector since the sample does not need to be analyzed immediately after freeze-thawing.

A preparation method of a reduced or oxidized albumin standard sample for accuracy control of albumin quantitative analysis, which includes removing low-molecular compounds by purification and adjusting pH is now described.

The albumin standard sample refers to an albumin solution having a stable presence ratio of reduced albumin and oxidized albumin. Of such albumin standard samples, one containing reduced albumin more than oxidized albumin (preferably more than 50%, more preferably not less than 70%, of the total of reduced albumin and oxidized albumin is reduced albumin) in a solution is referred to as a reduced albumin standard sample, and one containing oxidized albumin more than reduced albumin (preferably more than 50%, more preferably not less than 70%, of the total of reduced albumin and oxidized albumin is oxidized albumin) in a solution is referred to as an oxidized albumin standard sample.

A production method of an oxidized albumin standard sample, for accuracy control of albumin quantitative analysis, includes adding cysteine, homocysteine or glutathione, removing low-molecular compounds by ultrafiltration or purification by chromatography and adjusting pH.

Particularly, the above-mentioned albumin standard sample is suitable for controlling accuracy of measurement of Alb(red) %.

The adjustment of pH and removal of low-molecular compounds is as mentioned above regarding the albumin analysis method of the present invention.

A standard sample, for the measurement of a presence ratio of reduced albumin and oxidized albumin in an analysis sample, comprises an albumin wherein a free cysteine residue at the 34th position from the N-terminus is not modified (reduced albumin), and an albumin wherein a thiol compound other than albumin is bonded to a free cysteine residue at the 34th position from the N-terminus via a disulfide bond. Here, specific examples of the thiol compound other than albumin include cysteine, homocysteine and glutathione.

The above-mentioned standard sample is preferably prepared from blood, or using albumin prepared by recombinant DNA technology.

The method for preparing albumin from blood is not particularly limited, and a method generally used in the field of preparing albumin from the blood can be appropriately used. For example, a method including subjecting a collected blood sample to chromatography, and separating or purifying albumin can be mentioned. In this case, the albumin (reduced albumin + oxidized albumin) concentration of a standard sample solution is preferably 0.1 - 50 mg/ml.

The method of preparing albumin by recombinant DNA technology is not particularly limited, and the method to be generally used in the field to prepare albumin by recombinant DNA technology can be appropriately used. A recombinant DNA human serum albumin produced by a yeast as an expression system is reported (Fleer R. et al, Biotechnology (NY). 1991 Oct; 9(10): 968-75), and for example, the method described in this reference can be used.

The pH of the above-mentioned standard sample is preferably adjusted to 4 - 9 from the aspects of stability of reduced and oxidized albumins.

A solution obtained by dissolving the above-mentioned standard sample in at least one kind of buffer selected from the group consisting of phosphate buffer, Tris-HCl buffer, borate buffer, citrate buffer, acetate buffer, carbonate buffer, HEPES buffer and succinate buffer is preferable.

Furthermore, the above-mentioned standard sample is preferably free of a thiol compound other than reduced albumin.

since the amount and/or presence ratio of reduced albumin and oxidized albumin in a sample solution can be conveniently and accurately measured according to the method of the invention, the balance between oxidation and reduction of a test subject can be monitored. As a result, whether or not a test subject has fallen under a condition of oxidative stress, or hepatic disease, renal disease, diabetes, rheumatism, encephalopathy, fatigue, aging, cardiac disease, lung disease and the like, in which oxidized albumin increases, can be determined. Moreover, a drug for the prophylaxis or treatment of a condition of hepatic disease, renal disease, diabetes, rheumatism, encephalopathy, fatigue, aging, oxidative stress, cardiac disease, lung disease and the like can be screened for. Furthermore, an antioxidant to be a health material can also be screened for. Moreover, monitoring of an oxidative stress condition during drug administration also enables a search of applicable diseases of known or novel drugs.

The present invention is explained in detail in the following by referring to Examples, which are not to be construed as limitative.

### Example 1

A rat plasma sample was prepared as follows. The rat was anesthetized with diethyl ether as an inhalation anesthetic, and the blood was collected. The obtained blood was immediately separated to give plasma by centrifugation. Then, the plasma fraction was placed in another test tube, frozen with liquid nitrogen, and cryopreserved before use at -80°C.

The plasma sample of the above-mentioned normal rat, which had been cryoreserved at -80°C, was thawed on an ice bath, and the sample was diluted 100-fold with 50 mM NaH₂PO₄/Na₂HP0₄ (pH 6.0) and analyzed by HPLC-ESI-TOFMS.

A human plasma sample was prepared as follows. Blood was collected from a human test subject into a vacuum blood collection tube containing heparin, and transferred to a polypropylene tube for centrifugation. This was centrifuged at 4°C and 3000 rpm for 20 min, and the obtained supernatant fraction was used as a plasma component.

HPLC-ESI-TOFMS was performed using a system connecting a high performance liquid chromatography apparatus (HPLC: Ultimate Plus Capillary/Nano LC System, Dionex Corporation, USA) and an electrospray-ionization time-of-flight mass spectrometer (ESI-TOFMS: microTOF™, BRUKER Daltonics Inc., USA). The HPLC apparatus consisted of three modules of a micro auto injector (FAMOS), a micro flow pump of split system (Ultimate) and a pump mounted switching valve (Switchos).

The albumin in the sample was separated and concentrated using a trap column (MonoCap concentration column: GL Science Inc., inner diameter 0.2 mm, length 150 mm) and a separation column (MonoCap for Fast-flow: inner diameter 0.2 mm, length 50 mm).

The eluents for HPLC were solution (A) [acetonitrile/water (Milli-Q)(25:75 v/v, 1 L) mixture added with formic acid (1 mL)], and solution (B) [acetonitrile/water (Milli-Q)(90:10 v/v, 1 L) mixture added with formic acid (1 mL)]. The sample tray of the auto injector was set to 4°C, and sample vials was continuously cooled

The trap column was equilibrated by flowing solution (A) at a flow rate (0.05 mL/min), and the separation column was equilibrated by flowing solution (B) at a flow rate (15 µL/min, pump set flow rate 0.125 mL/min, substantial flow rate 15 µL/min by split flow path).

The above-mentioned solution after dilution and filtration treatment was placed in a vial, set on a sample tray and the measurement was started. The volume of sample injection was set to 2 µL, and solution (A) was sent at 0.05 mL/min from Swichos during the period of from 0 min to 10 min from the start of the measurement, during which salt and contaminant components in the sample passed through the trap column and albumin was adsorbed by the trap column, whereby desalting and concentration were achieved. From 10 min to 15 min from the start of the measurement, the flow path was changed by switching valve to form a flow path connecting the trap column and the separation column. At this time, by sending solution (B) from Ultimate at a flow rate of 15 µL/min, albumin adsorbed on the trap column was transferred to a separation column, and retained in the separation column. From 15 min to 35 min from the start of the measurement, the flow path was changed again to form separate flow paths for the trap column and the separation column, during which solution (B) was sent from Ultimate at a flow rate of 15 µL/min, wherein other contaminant components containing albumin were crudely separated. On the other hand, from 15 min to 25 min from the start of the measurement, solution (B) was sent from Switchos at a flow rate of 0.07 µL/min, whereby the residual substances retained in the trap column was eluted. From 25 min to 35 min from the start of the measurement, solution (A) was sent from Switchos at a flow rate of 0.07 µL/min, whereby the trap column was initiated with solution (A).

Albumin eluted from the separation column was ionized at an electrospray ion source part to be the interface between high performance liquid chromatography and mass spectrometer, and detected by mass spectrometer All mass spectra were subjected to a method wherein ionization and ion detection parameter had been optimized. The detection mass range of mass spectrometer was set to m/z 50 - 3000, and albumin multivalent charged with positive ion was detected. The ionization parameter conditions were the following values. End Plate Offset: -500 V, Capillary: -5000 V, Neblizer Gas: 0.4 Bar, Dry Gas: 5.0 L/min, Dry Temp: 200°C.

The software to control mass spectrometer: the ionized albumin was detected by microTOF Control. The optimized conditions were Capillary Exit: 150 to 250 V, Skimmer 1:50 to 100V, Hexapole 1:24 to 36V, Skimmer 2:25 to 35V, Hexapole 2:18 to 24V, Hexapole RF: 500 to 800V, Transfer Time: 30 to 50 µs, Pre Puls Storage: 20 to 40 µs, Lens 1 Storage: 30 to 60V, Lens 1 Extraction: 18 to 24V, Lens 2: -15 to +15V, Lens 3: -70 to - 10V, Lens 4: -15 to +15V, Lens 5: -60 to +20V, Detector: 1400 to 1600V, Rolling Average: 3, Summation: 20000, Pulser Push/Pull: 380 to 400V, Corrector Fill: 40 to 50V, Corrector Extract: 800 to 1000V, Flight Tube: 9000V, Reflector: 1300V and TOF Detector: 1800 to 2000V.

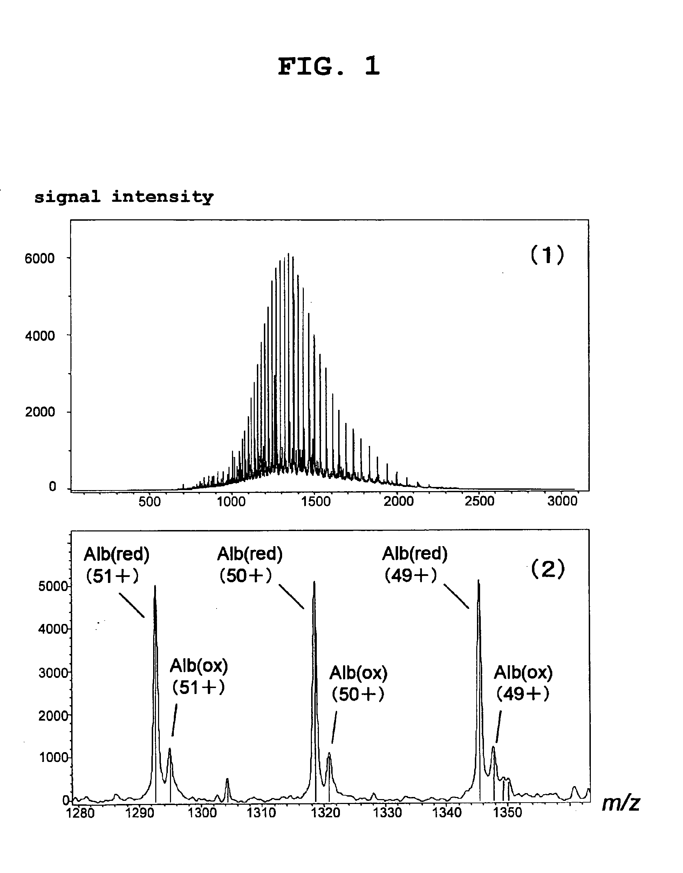

For data analysis, mass spectrometer data analysis software microTOF Data analysis was used. The albumin ionized by an electrospray method formed multiply-charged ion, and detected as plural peaks (Fig. 1(1)). For mass spectrum, after a smoothing treatment (Gauss algorithm: m/z width=0.1, Cycle=1) and a baseline treatment, peaks of the same charge were determined by Deconvolution function. Two peaks respectively showing the same charge were detected, and those with a smaller m/z were taken as Alb(red), and those with a higher m/z were taken as Alb(ox) (Fig. 1(2)). The peaks detected within the range of m/z 1220 to 1410 were derived from multiply charged albumin (46+ to 53+). From the peak intensity (height), Alb(red)%={Alb(red) peak intensity (height)/(Alb(red) peak intensity (height) + Alb(ox) peak intensity (height))}x100 of each valence was determined and the average value was calculated.

Since the proportion of Alb(red) in the sample decreases due to natural oxidation reaction, the Alb(red) % value tends to decrease with time. Therefore, the plasma sample was diluted 100-fold and filtered with a buffer to control pH of the sample.

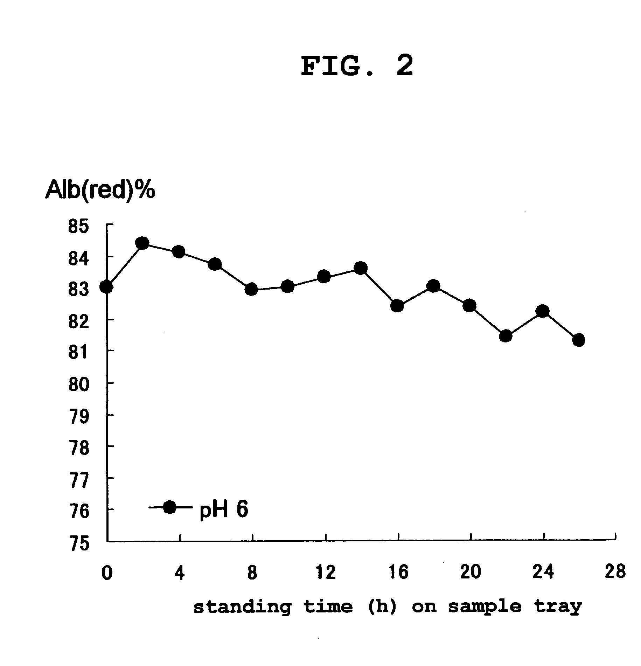

As for rat plasma, when 50 mM phosphate buffer (pH 6.0) was used as a dilution solution, a tendency toward decrease was somewhat observed, but stable Alb(red)% value was obtained even at 24 hr after the treatment (Fig. 2).

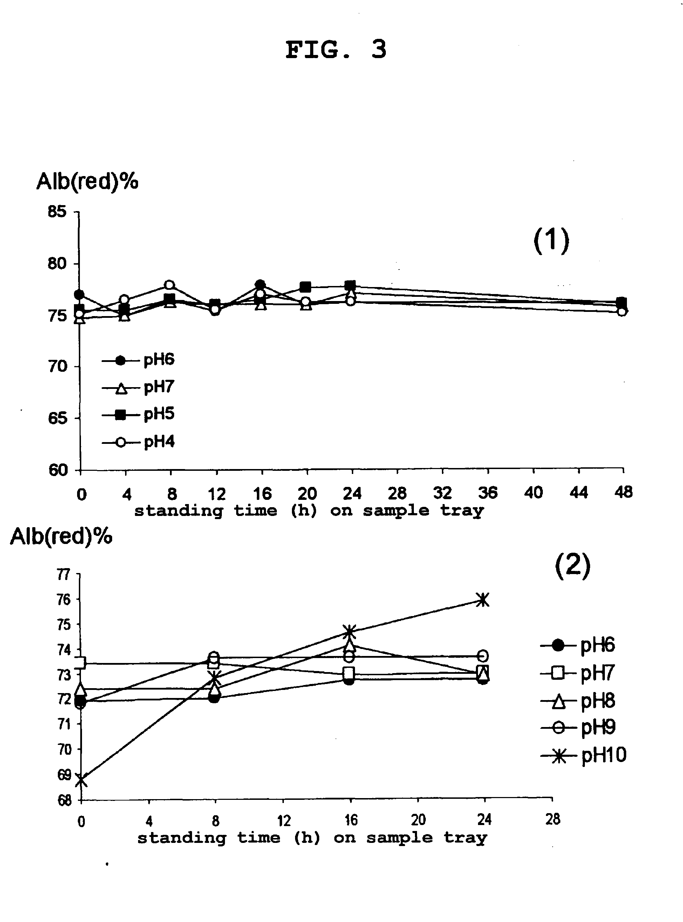

As for human plasma, the stability test of Alb(red) was performed for an enlarged pH range. The dilution buffers used were 50 mM acetate buffers (pH 3.0, pH 4.0 and pH 5.0), 50 mM phosphate buffers (pH 6.0, pH 7.0 and pH 8.0), and 0.1 M carbonate buffers (pH 9.0 and pH 10.0). The pH applicable range on the acidic region was confirmed. As a result, an albumin-derived signal was not observed on the mass spectrum at pH 3.0, but at the range of from pH 4.0 to pH 7.0, stable Alb(red)% value was obtained even after 48 hr from the start of standing on a sample tray (Fig. 3(1)). Similarly, the applicable range on the alkaline region was confirmed. As a result, with the range of from pH 6.0 to pH 9.0, stable Alb(red)% value was obtained even after 24 hr from the start of standing on a sample tray. At pH 10.0, however, a tendency toward an increase in the Alb(red)% value was confirmed with the lapse of standing time (Fig. 3(2)). As demonstrated, human plasma permits a stable measurement of Alb(red) % by applying a dilution buffer at pH 4.0 to pH 9.0.

Since a sample solution treated by the method of the present invention shows stable Alb(red)% values even after standing on a sample tray for 24 hr, an automated measurement by an auto injector can be made possible.

In addition, an influence of a dilution ratio on Alb(red) % when the dilution ratio was changed to 10-fold, 20-fold, 50-fold and 100-fold with 50 mM phosphate buffer (pH 6.0) was also studied.

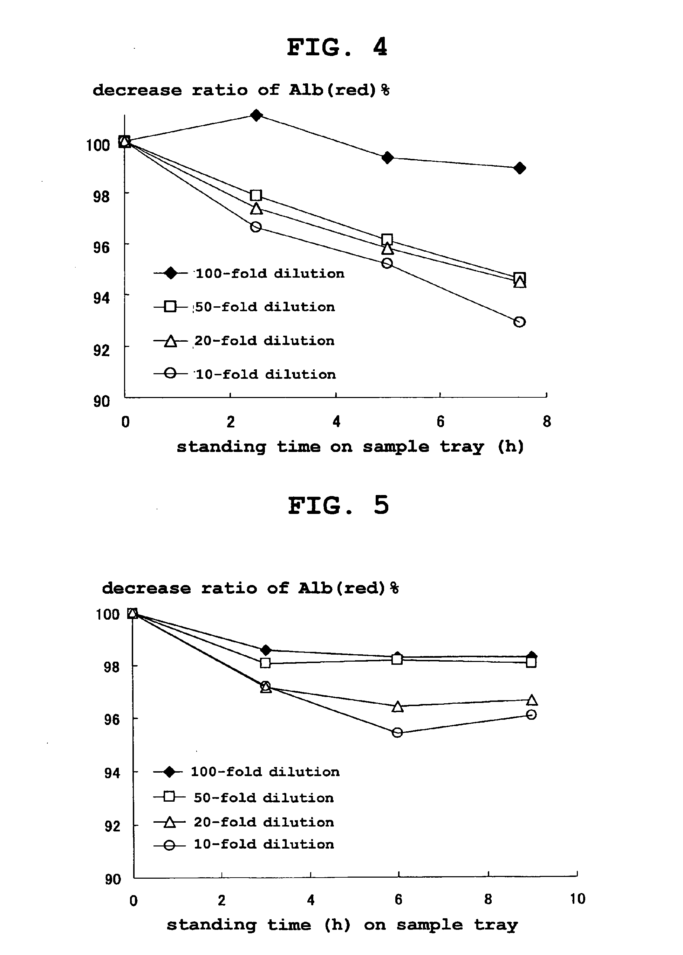

In the case of rat plasma, a treatment at a 100-fold dilution ratio afforded stable Alb(red)% values even after 24 hr from the dilution filtration treatment. At dilution ratios of 10-fold, 20-fold and 50-fold, however, a decrease in the Alb(red)% value was confirmed after 2 hr standing on a sample tray, and the tendency grew with time (Fig. 4).

In the case of human plasma, a treatment at a 50-fold or 100-fold dilution ratio afforded stable Alb(red)% values even after 24 hr from the dilution filtration treatment. At dilution ratios of 10-fold and 20-fold, however, a decrease in the Alb(red)% value was confirmed after 3 hr standing on a sample tray, and the value further decreased thereafter and reached an approximately constant value after 6 hr (Fig. 5)

### Example 2

Plasma samples of a hepatic disease model rats prepared by repetitive administration of carbon tetrachloride were subjected to measurement.

Hepatic disease-induced model rats were prepared by subcutaneously administering a mixture (1 mL/kg) of equivalent amounts of carbon tetrachloride (CCl₄) and olive oil to SD rats twice a week. Blood (1 mL) was collected under ether anesthesia from the subclavian vein per month from the start of CCl₄ administration. Simultaneously, blood was sampled from normal rats as a control group. The collected blood was immediately placed in an ice bath, and centrifuged within an hour to separate the plasma. The separated plasma was immediately frozen with liquid nitrogen and preserved at -80°C. The preserved samples were thawed before measurement and treated as described in the following (1) or (2). The Alb(red)% value of the plasma samples of both the normal rats and the hepatic disease model rats (22 weeks after the start of CCl₄ administration) was calculated.
(1) After freeze-thawing, the sample was immediately diluted 100-fold with 50 mM phosphate buffer (pH 6.0). Then, the solution was placed in a vial, set on an auto sampler set to temperature 4°C, and analyzed by HPLC-ESI-TOFMS.
(2) After freeze-thawing, plasma was incubated at 37°C for 2 hr. After the completion of incubation, a treatment similar to the treatment after freeze-thawing of (1) was performed.

HPLC-ESI-TOFMS and calculation of Alb(red) % value were performed in the same manner as in Example 1.

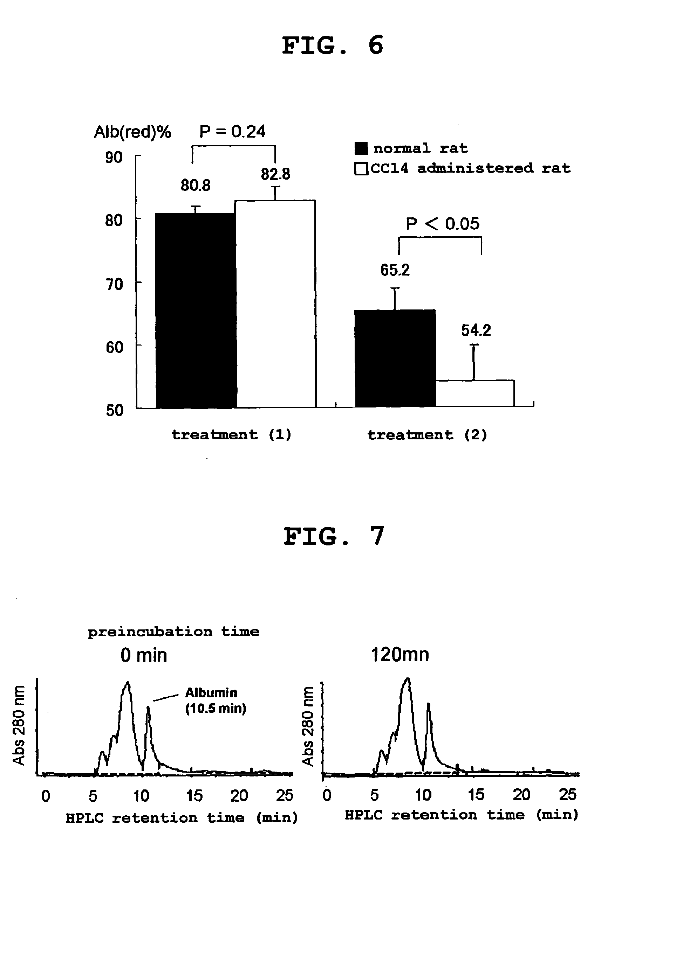

With treatment (1), the Alb(red)% value was (80.8±1.1) for the normal rats and (82.8±2.3) for the hepatic disease model rats. On the other hand, with treatment (2), the Alb(red)% value was (65.2±3.7) for the normal rats and (54.2±5.6) for the hepatic disease model rats (Table 1 and Fig. 6).

**Table 1. Fluctuation of Alb(red)% values by change of pretreatment methods of normal rats and CCl₄ administrated rats**

| | treatment (1) | | treatment (2) | |
|---|---|---|---|---|
| | normal rats | CCl₄ administrated rats | normal rats | CCl₄ administrated rats |
| #1 | 82.0 | 82.3 | 63.7 | 49.6 |
| #2 | 79.8 | 80.8 | 69.4 | 52.7 |
| #3 | 80.5 | 85.3 | 62.6 | 60.4 |
| average | 80.8 | 82.8 | 65.2 | 54.2 |
| SD | 1.1 | 2.3 | 3.7 | 5.6 |
| RSD% | 1.4 | 2.8 | 5.6 | 10.3 |
| t-test | 0.240 | | 0.046 | |

With treatment (1), no significant difference was observed between the normal group and the hepatic disease model group. However, by conducting treatment (2), a significant difference appeared between the normal rat group and the hepatic disease model rat group (p<0.05), and therefore, the pathology of hepatic disease could be conveniently monitored using Alb(red)%.

### Example 3

In the Examples presented above, Alb(red)% was analyzed using a liquid chromatography-mass spectrometer (LC-ESI-TOFMS). In this Example, however, high performance liquid chromatography (HPLC) alone was used as an analyzer.

As the high performance liquid chromatography (HPLC), an AKTAexplorer 10S (GE Healthcare (formerly Amersham Biosciences AB), Sweden) system was used. As an HPLC eluent, 30 mM phosphate buffer (pH 6.85) containing 0.15 M sodium sulfate was used at a flow rate of 0.8 mL/min. As a separation column, Shodex Asahipak GS-520 7E was used. Measurement signals were monitored by UV detection (detection wavelength 280 nm).

A normal rat plasma sample cryopreserved at -80°C was thawed in an ice bath, and diluted 5-fold with 50 mM phosphate buffer (pH 6.0). A 5-fold diluted sample immediately applied to the HPLC apparatus and a 5-fold diluted sample subjected to a 2-hr preincubation treatment at room temperature were analyzed. As a result, a peak derived from reduced albumin was observed on the chromatogram at near 10.5 min. Since there is no change observed in the chromatogram pattern before and after the preincubation treatment, it was confirmed that albumin in rat plasma was stable by the use of the buffer at pH 6.0 (Fig. 7).

### Example 4

KK-Ay mouse has been modified by introducing the obesity gene Ay to prepare a <type 2 diabetes model> that expresses obesity and hyperglycemia earlier and severer than KK mouse does. The KK-Ay mouse is a <complicated model> prepared by introducing the Ay gene into a KK mouse, and characteristically expresses obesity and hyperglycemia earlier (7-8-week-old) and severer than the KK mouse does. Using a KK-Ay mouse (CLEA Japan, Inc.) as an inherited spontaneously diabetes model mouse, Alb(red)% value of the plasma samples was measured. Collected blood from a normal mouse or diabetes model mouse was immediately placed in an ice bath and centrifuged within an hour to give a plasma sample. The plasma samples were immediately frozen with liquid nitrogen and preserved at -80°C. The preserved samples were treated as described in the following (1) or (2), and then the Alb(red)% value of the plasma samples of both the normal rat and the diabetic mouse was calculated.
(1) After freeze-thawing, the sample was immediately diluted 100-fold with 50 mM phosphate buffer (pH 6.0). Then, the solution was placed in a vial, set on an auto sampler set to temperature 4°C, and analyzed by HPLC-ESI-TOFMS.
(2) After freeze-thawing, plasma was incubated at 37°C for 2 hr. After the completion of incubation, a treatment similar to the treatment after freeze-thawing of (1) was performed. HPLC-ESI-TOFMS and calculation of Alb(red)% value were performed in the same manner as in Example 1.

With treatment (1), the Alb(red)% was 80.3% for the normal mouse and 80.1% for the diabetes model mouse. On the other hand, with treatment (2), the Alb(red)% value was (72.4±0.8) for the normal mouse and (68.9±1.7) for the diabetes model mouse. As demonstrated, the preincubation treatment rendered remarkable the difference in Alb(red)% between the samples.

Moreover, a peak derived from glycated albumin was confirmed in addition to the reduced albumin and oxidized albumin (Fig. 8). The proportion of glycated albumin in the whole albumin is 9.9% for the normal mouse and 13.9% for the diabetes mouse. Thus, glycated albumin was observed in a greater amount in the diabetes mouse.

### Example 5

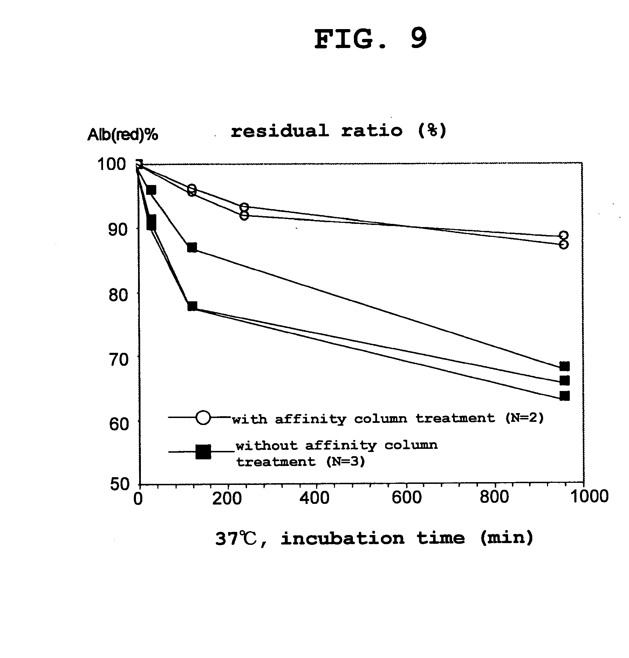

Plasma of a wild-type rat (Sparague-Dawley or F344 rat, male, CLEA Japan, Inc.) was diluted with 50 mM phosphate buffer (pH 6.0). After a filtration treatment using a 0.45 µm filter, the solution was applied to an affinity chromatography Blue HP column equilibrated with 50 mM phosphate buffer. Albumin in the plasma was retained on the column resin, and other contaminant components passed through the column or were removed by washing. Lastly, the albumin adsorbed onto the column was eluted with 50 mM phosphate buffer (pH 6.0) containing 1.5 M potassium chloride, which was followed by incubation treatment at 37°C for 2 hr. The change in Alb(red)% at this time was measured in the same manner as in Example 1, and the results were compared between the Blue HP column treated sample and the nontreated sample (Fig. 9). As a result, the sample subjected to the Blue HP column treatment showed a smaller change in Alb(red)%. As demonstrated, stabilization of Alb(red) could be achieved since affinity chromatography removed contaminant components in the sample.

### Example 6

The data presented above relate to the stability after plasma separation. In this Example, the stability of Alb(red) in collected blood was examined as a situation more suitable for clinical tests.

### <Sample treatment>

Blood was collected from healthy volunteers (N=3), treated according to any of the methods of 1) heparin addition, 2) addition of 0.5 M sodium citrate buffer (pH 4.3) in 1/9 of the amount of blood, and 3) addition of 75 mM sodium phosphate buffer (pH 6) in 9-fold amount of blood, and preserved in a refrigerator (4°C).

Immediately after the treatment and 3, 6, 24, 30 and 48 hr after the treatment, a given amount of each treated blood was taken and centrifuged to give a plasma component. Plasma was frozen with liquid nitrogen immediately after collection and preserved in a freezer (-80°C).

### <Measurement method>

Treated bloods 1) and 2) were diluted 100-fold with a diluted solution (50 mM sodium phosphate buffer, pH 6.0) and treated blood 3) was diluted 10-fold with the same dilution solution, and the oxidized albumin ratio and reduced albumin ratio were calculated according to HPLC-ESI-TOFMS described in Example 1.

### <Measurement results>

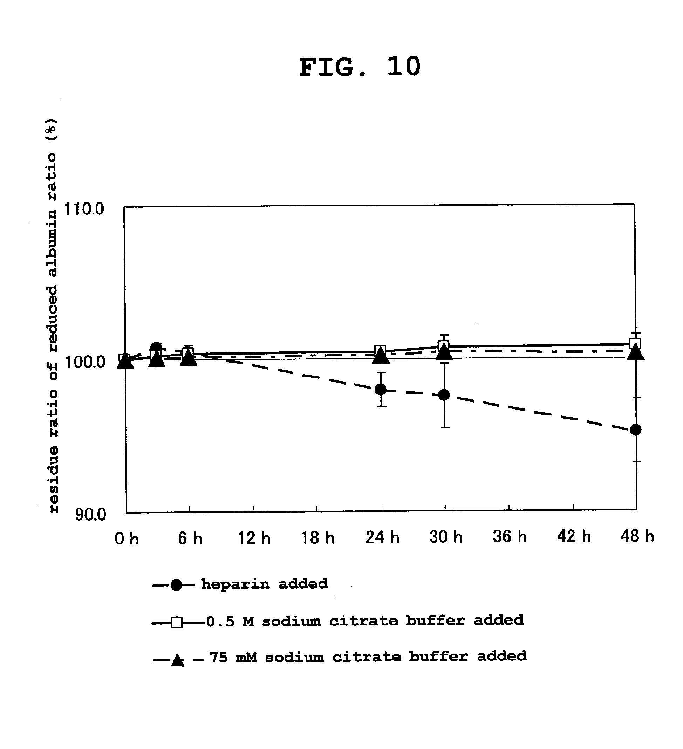

The residual ratio of the reduced albumin ratio (Alb(red)%) was calculated. With regard to treated blood 1), the residual ratio decreased with the preservation time and was 95% at 48 hr later. On the other hand, with regard to treatment bloods 2) and 3), the residual ratio after 48 hr of preservation was 100-101%, with no fluctuation (Fig. 10). It was therefore demonstrated that the fluctuation of the reduced albumin ratio could be suppressed by pH adjustment or dilution.

### Example 7

The stability of reduced albumin in a sample from blood collection to measurement was examined by the HPLC method in the same manner as in Example 6.

### <Sample treatment>

Blood was collected from healthy volunteers (N=5, samples 1-5), 0.5 M sodium citrate buffer (pH 4.3) in 1/10 the amount of the collected blood was added thereto, and the mixture was preserved in a refrigerator (4°C).

Immediately after the treatment and 24 and 72 hr after the treatment, a given amount of each treated blood was taken and centrifuged to give a plasma component.

### <Measurement method>

Plasma was diluted 50-fold with 50 mM sodium phosphate buffer (pH 6.0) and used as an HPLC sample.

### HPLC conditions

column: ES-502N 7.6 mm i.d. x 100 mm DEAE-form (Shodex)
column temperature: 35°C
Solvent A: 50 mM sodium acetate-400 mM sodium sulfate (pH 4.85)
Solvent B: ethanol
Gradient: A/B = 100/0→5 min→100/0→25 min→95/5→5 min→100/0→5 min→100/0
Flow: 1.0 mL/min
detection: fluorescence ex. 280 nm em. 340 nm
sample injection volume: 20 µL

### <Measurement results>

### Reduced albumin ratio (HPLC method)

| sample No. | 0 h | 24 h | 72 h |
|---|---|---|---|
| sample 1 | 77.4% | 77.9% | 77.4% |
| sample 2 | 77.1% | 77.7% | 77.4% |
| sample 3 | 79.6% | 79.9% | 79.4% |
| sample 4 | 77.0% | 77.2% | 76.5% |
| sample 5 | 72.7% | 73.0% | 72.8% |

### Residual ratio of reduced albumin ratio (HPLC method)

| sample No. | 0 h | 24 h | 72 h |
|---|---|---|---|
| sample 1 | 100.0% | 100.6% | 100.0% |
| sample 2 | 100.0% | 100.8% | 100.4% |
| sample 3 | 100.0% | 100.4% | 99.7% |
| sample 4 | 100.0% | 100.3% | 99.4% |
| sample 5 | 100.0% | 100.4% | 100.1% |

The residual ratio of reduced albumin ratio after 72 hr preservation was 99.4 - 100.4%, and fluctuation was not observed as compared to immediately after the treatment. From these results, the stability of reduced albumin up to 72 hr after blood sample collection could be confirmed, thus ensuring possible transport of an analysis sample from a hospital to an analytical laboratory.

### Example 8

In this Example, the stability of a sample with removal of low-molecular compounds from plasma was confirmed using solid phase extraction as chromatography.

### <Sample treatment>

Blood was collected from healthy volunteers (N=3, A - C), treated by a method of 1) heparin addition, or 2) addition of 0.5 M sodium citrate buffer (pH 4.3) in 1/9 amount of blood, and centrifuged to give plasma components.

### <Solid phase extraction>

1. 50 mM sodium phosphate buffer (pH 6.0, 1980 uL) was added to plasma (20 µL) .
2. A solid phase extraction column (Bond Elut-C18 EWP 200 mg/3 cc) was activated and equilibrated. Activation was performed with 90% acetonitrile (2 mL) containing 0.1% formic acid, and equilibration was performed with water (1 mL).
3. The sample of 1 was applied to the solid phase extraction column of 2.
4. The column was washed with 10% acetonitrile (2 mL) containing 0.1% formic acid, and albumin was eluted with 90% acetonitrile (1 mL) containing 0.1% formic acid.
5. The eluate of 4 was directly used as a measurement sample.

### <ESI-TOFMS measurement conditions>

Eluent: 90% Acetonitrile containing 0.1% formic acid was flown at a flow rate of 15 µL/min and, using an auto sampler, a measurement sample (1 µL) was injected into an ESI-TOFMS according to the flow-injection method. The MS conditions for the measurement were the same as those of the MS segment of the HPLC-ESI-TOFMS described in Example 1.

### <Measurement results>

According to the above, human blood was treated to give a plasma, which was then subjected to solid phase extraction to give a sample. The stability thereof in the autosampler for the ESI-TOFMS measurement was examined. The residual ratio of the reduced albumin ratio (%) was measured on the first day, day one and day two and shown in the following table.

| | heparin added collected plasma + solid phase extraction | | | citric acid Na added collected plasma + solid phase extraction | | |
|---|---|---|---|---|---|---|
| | A | B | C | A | B | C |
| Day 0 | 100.0 | 100.0 | 100.0 | 100.0 | 100.0 | 100.0 |
| Day 1 | 100.5 | 100.4 | 100.3 | 100.4 | 100.4 | 100.4 |
| Day 2 | 100.8 | 100.8 | 100.6 | 100.7 | 100.7 | 100.6 |

Both treated bloods 1) and 2) were stable on the auto sampler for two days. Accordingly, regardless of the blood collection methods, by solid phase extraction thereafter for chromatography, the blood samples were maintained stably for two days before analysis. From the results, it is clear that removal of low-molecular compounds in the plasma by chromatography suppresses formation of oxidized albumin, and enables stable analyses. The results of this Example ensure stability of the analysis method of the present invention.

Furthermore, assuming actual blood collection at hospitals and the like, the plasma preservation stability was confirmed according to the solid phase extraction method.

### <Sample treatment>

Blood was collected from healthy volunteers (N=3), treated according to either method of 1) heparin addition or 2) addition of 0.5 M sodium citrate buffer (pH 4.3) in 1/9 of the amount of blood, and centrifuged to give a plasma component.

Immediately after plasma separation, after one-day preservation in a refrigerator and after two-day preservation in a refrigerator, the obtained plasma was subjected to solid phase extraction in the same manner as above, and then to ESI-TOFMS measurement.

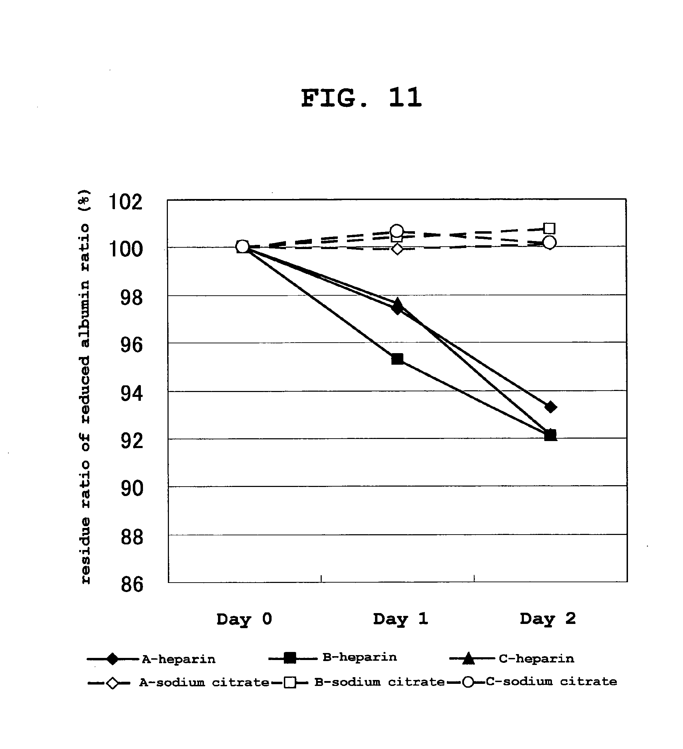

### <Measurement results (Fig. 11)>

The residual ratio of reduced albumin ratio (Alb(red) %) was calculated. With regard to treated blood 1), the residual ratio decreased with the preservation time and became 92-94% 2 days later. On the other hand, with respect to treated bloods 2) and 3), the residual ratio after 2-day preservation was 100-101%, with no fluctuation as compared to that immediately after the treatment. It was confirmed from these results that reduced albumin remained stable for 2 days by refrigeration, due to the pH adjustment treatment. Moreover, the flow-injection method wherein solid phase extraction and ESI-MS are combined can drastically shorten the measurement time as evidenced by the MS measurement time of not more than 5 min.

### Example 9

In this Example, a preparation method of reduced or oxidized albumin standard sample is described.

Blood was collected from healthy volunteers, and a plasma sample was obtained by plasma separation. The sample was subjected to albumin purification by affinity chromatography according to the procedures shown in Example 5. The purified eluate was diluted to 4 mg/mL with 50 mM phosphate buffer containing 1.5 M potassium chloride (pH 6.0) (this was used as a reduced albumin standard sample). To this solution was added, as thiol group-containing low-molecular compounds, any of cysteine, cystine which is an oxidant thereof, homocysteine, homocystine which is an oxidant thereof, reduced glutathione and its oxidant, oxidized glutathione to give an oxidized albumin standard sample.

As oxidized albumins existing in the living body, 3 kinds of cysteine-added albumin, homocysteine-added albumin and glutathione-added albumin were respectively prepared as follows.

For preparing cysteine-added albumin, a 4 mg/mL purified albumin solution (120 mL) was mixed with a 0.6 mM aqueous cysteine (manufactured by Sigma Ltd.) solution (12 mL) and a 0.6 mM aqueous cystine (manufactured by Sigma Ltd.) solution (108 mL).

For preparing homocysteine-added albumin, a 4 mg/mL purified albumin solution (120 mL) was mixed with a 3 mM aqueous homocysteine (manufactured by Sigma Ltd.) solution (8 mL) and a 3 mM aqueous homocystine (manufactured by Sigma Ltd.) solution (72 mL).

For preparing glutathione-added albumin, a 4 mg/mL purified albumin solution (120 mL) was mixed with a 3 mM aqueous reduced glutathione (manufactured by Wako Pure Chemical Industries, Ltd.) solution (8 mL) and a 3 mM aqueous oxidized glutathione (manufactured by Wako Pure Chemical Industries, Ltd.) solution (72 mL).

Every prepared solution was divided and placed in several Falcon tubes (50 cc size), and the tubes were flushed with argon gas. The tubes were left standing in a 37°C incubator (horizontally placed) for 48 hr. After completion of the reaction, excess thiol group-containing low-molecular compounds and its oxidant were removed and the solution was concentrated by ultrafiltration using Microcon YM-30 (500 µL size: manufactured by MILLIPORE). The solution was centrifuged at 2000 rpm and buffer was exchanged with 50 mM phosphate buffer containing 0.9 w/v% sodium chloride (pH 7.3). The steps (1)-(3) of (1) albumin solution concentration, (2) removal of filtration solution and (3) charging with 50 mM phosphate buffer containing 0.9 w/v% sodium chloride (pH 7.3) were repeated 15 times or more to remove the thiol group-containing low-molecular compounds and its oxidant in the prepared solution.

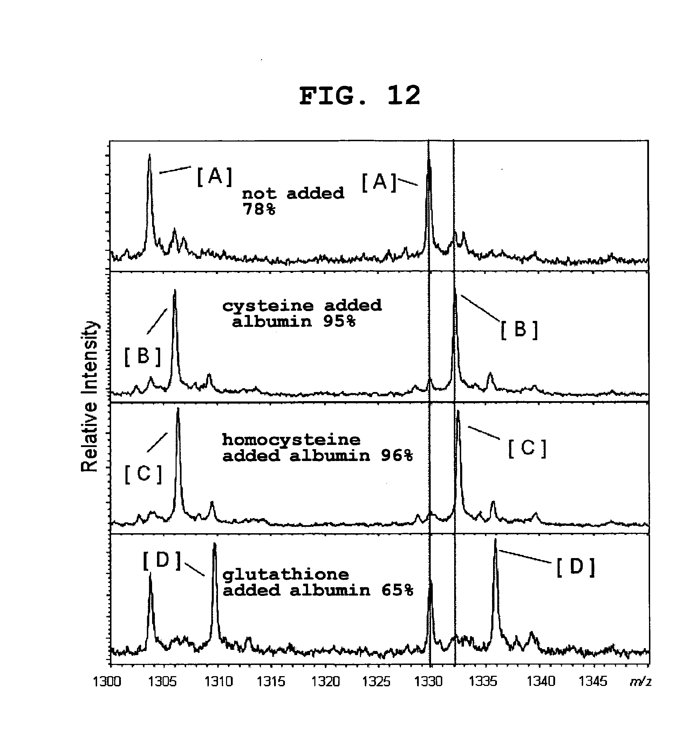

The purity (%) of the reduced or oxidized albumin in the oxidized albumin standard samples (3 kinds) obtained by this preparation method (proportion of reduced or oxidized albumin relative to the total of reduced albumin and oxidized albumin) was determined by the HPLC-ESI-TOFMS measurement described in Example 1 (Fig. 12). As a result, the purity of the oxidized albumin in the cysteine-added albumin ([B] in Fig. 12), homocysteine-added albumin ([C] in Fig. 12) and glutathione-added albumin ([D] in Fig. 12) was 95%, 96% and 65%, respectively. On the other hand, the purity of the reduced albumin in the reduced albumin standard sample ([A] in Fig. 12) was 78%.

The stability of the reduced albumin standard solution and various oxidized albumin standard samples prepared according to the above-mentioned methods was evaluated after preservation at 4°C, -20°C and -80°C. Sampling was conducted at regular intervals, and changes in the purity were measured using the HPLC-ESI-TOFMS described in Example 1. Preservation stability of reduced albumin and oxidized albumin standard samples (purity change rate %)

| reduced albumin | day 0 | day 21 | day 44 | day 91 |
|---|---|---|---|---|
| 4°C | 100.0 | 100.3 | 97.8 | 100.8 |
| -20°C | 100.0 | 100.4 | 97.8 | 100.9 |
| -80°C | 100.0 | 101.2 | 98.4 | 102.0 |

| cysteine added oxidized albumin | day 0 | day 21 | day 44 | day 91 |
|---|---|---|---|---|
| 4°C | 100.0 | 99.5 | 100.9 | 99.9 |
| -20°C | 100.0 | 101.9 | 101.5 | 103.0 |
| -80°C | 100.0 | 101.9 | 101.8 | 102.8 |

| homocysteine added oxidized albumin | day 0 | day 21 | day 44 | day 91 |
|---|---|---|---|---|
| 4°C | 100.0 | 100.1 | 98.5 | 100.8 |
| -20°C | 100.0 | 100.2 | 99.2 | 101.5 |
| -80°C | 100.0 | 100.2 | 99.8 | 101.6 |

| glutathione added oxidized albumin | day 0 | day 21 | day 44 | day 91 |
|---|---|---|---|---|
| 4°C | 100.0 | 102.7 | 103.3 | 103.2 |
| -20°C | 100.0 | 101.3 | 102.7 | 104.3 |
| -80°C | 100.0 | 100.8 | 101.4 | 101.9 |

As a result, the purity of the oxidized albumin standard samples hardly changed at all temperatures, thereby showing the preservation stability of the oxidized albumin standard samples.

In addition, albumin was analyzed according to the HPLC method described in Example 7 and using the prepared standard samples. The analyzed values of the purity of reduced albumin, cysteine-added albumin and glutathione-added albumin matched well with the values measured by ESI-TOFMS with higher accuracy. Therefore, the analysis accuracy of the HPLC method could be guaranteed by using the albumin standard samples of the present invention.

| | ESI-TOFMS method | HPLC method |
|---|---|---|
| reduced albumin standard sample | reduced albumin purity 75% | reduced albumin purity 76% |
| oxidized albumin standard sample | oxidized albumin purity 95% | oxidized albumin purity 95% |

### Industrial Applicability

According to the present invention, since the amount and presence ratio of reduced/oxidized albumins and glycated protein components can be conveniently measured with high sensitivity, a method useful for biochemical study, diagnosis of diseases and screening for pharmaceutical agents can be provided. In particular, since the presence ratios of reduced/oxidized albumins and glycated protein components can be conveniently measured with high sensitivity, various conditions associated with oxidative stress, such as hepatic disease, renal disease, diabetes, rheumatism, encephalopathy, fatigue, aging, oxidative stress, cardiac disease, lung disease and the like can be preferably analyzed.

## Claims

1. A method of analysing the amount of reduced albumin and oxidized albumin and/or presence ratio of reduced albumin and oxidized albumin in a sample of blood or plasma from a test subject, the method comprising diluting the sample 50- to 100000- fold with a buffer thereby to obtain a sample solution having a pH of 4-9 and subjecting the solution to mass spectrometry or liquid chromatography.

2. The method of claim 1, which comprises incubating the sample solution for 0 - 100 hr, adjusting the pH thereof and subjecting the diluted sample solution to mass spectrometry or liquid chromatography.

3. The method of claim 1 or claim 2, wherein the buffer is at least one kind selected from the group consisting of phosphate buffer, Tris-HCl buffer, borate buffer, citrate buffer, acetate buffer, carbonate buffer, HEPES buffer and succinate buffer.

4. The method of claim 2, wherein the incubation temperature is 4 - 60°C.

5. The method of any one of claims 1 to 4, which comprises an ultrafiltration treatment before mass spectrometry or liquid chromatography.

6. The method of any one of claims 1 to 5, which comprises purification by chromatography before mass spectrometry or liquid chromatography.

7. The method of claim 6, wherein the chromatography is at least one kind selected from the group consisting of high performance liquid chromatography, reversed phase chromatography, normal phase chromatography, affinity chromatography, ion exchange chromatography, gel filtration chromatography and hydrophobic chromatography.

8. The method of any one of claims 1 to 7, wherein the mass spectrometry is performed using at least one kind of apparatus selected from the group consisting of an electrospray ionization time-of-flight mass spectrometer, a quadrupole mass spectrometer, an ion trap mass spectrometer, a Fourier transform ion cyclotron mass spectrometer, a matrix-assisted laser desorption-ionization time-of-flight mass spectrometer, a magnetic sector-type mass spectrometer and a tandem quadrupole mass spectrometer.

9. The method of any one of the preceding claims, wherein the sample is from a test subject in at least one state or feared to be in at least one state selected from the group consisting of a hepatic disease, a renal disease, diabetes, rheumatism, encephalopathy, fatigue, aging, oxidative stress, a cardiac disease and a lung disease.

10. A method of analyzing blood or plasma from a test subject in at least one state or feared to be in at least one state selected from the group consisting of a hepatic disease, a renal disease, diabetes, rheumatism, encephalopathy, fatigue, aging, oxidative stress, a cardiac disease and a lung disease, which comprises analyzing, by the method of any one of claims 1 to 8, amount of reduced albumin and oxidized albumin and/or presence ratio of reduced albumin and oxidized albumin in blood or plasma taken from the test subject.

11. A method of screening a test substance, comprising measuring, by the method of any one of claims 1 to 8, amount of reduced albumin and oxidized albumin and/or presence ratio of reduced albumin and oxidized albumin in a sample of a test subject with or without administration of a test substance,
comparing the amount and/or presence ratio obtained with administration of a test substance and the amount and/or presence ratio obtained without administration of a test substance, and
selecting a sample showing a greater amount and/or presence ratio of reduced albumin with administration of test substance as compared to non-administration thereof.

12. The method of claim 11, wherein the test substance is an antioxidant.

## Patentansprüche

1. Verfahren zum Analysieren der Menge von reduziertem Albumin und oxidiertem Albumin und/oder des Verhältnisses von reduziertem Albumin und oxidiertem Albumin in einer Blut- oder Plasmaprobe aus einem Testsubjekt, wobei das Verfahren das 50- bis 100.000-fache Verdünnen der Probe mit einem Puffer, wobei eine Probenlösung mit einem pH-Wert von 4 bis 9 erhalten wird, und das Unterziehen der Lösung einer Massenspektrometrie oder Flüssigchromatographie umfasst.

2. Verfahren nach Anspruch 1, welches das Inkubieren der Probenlösung während 0 bis 100 Stunden, das Einstellen ihres pH-Wertes und das Unterziehen der verdünnten Probenlösung einer Massenspektrometrie oder Flüssigchromatographie umfasst.

3. Verfahren nach Anspruch 1 oder 2, wobei der Puffer mindestens ein aus der aus Phosphatpuffer, Tris-CHl-Puffer, Boratpuffer, Citratpuffer, Acetatpuffer, Carbonatpuffer, HEPES-Puffer und Succinatpuffer bestehenden Gruppe ausgewählter Puffer ist.

4. Verfahren nach Anspruch 2, wobei die Inkubationstemperatur 4 bis 60°C ist.

5. Verfahren nach einem der Ansprüche 1 bis 4, welches eine Ultrafiltrationsbehandlung vor der Massenspektrometrie oder Flüssigchromatographie umfasst.

6. Verfahren nach einem der Ansprüche 1 bis 5, welches die Reinigung durch Chromatographie vor der Massenspektrometrie oder Flüssigchromatographie umfasst.

7. Verfahren nach Anspruch 6, wobei die Chromatographie mindestens eine aus der aus Hochleistungsflüssigchromatographie, Umkehrphasenchromatographie, Normalphasenchromatographie, Affinitätschromatographie, Ionenaustauschchromatographie, Gelfiltrationschromatographie und hydrophober Chromatographie bestehenden Gruppe ausgewählte Chromatographie ist.

8. Verfahren nach einem der Ansprüche 1 bis 7, wobei die Massenspektrometrie unter Verwendung mindestens einer Art eines Apparates durchgeführt wird, der aus der Gruppe ausgewählt ist, die aus einem Elektronenspray-Ionisations-Flugzeit-Massenspektrometer, Quadrupol-Massenspektrometer, Ionenfallen-Massenspektrometer, Fourier-Transformations-Ionen-Cyclotron-Massenspektrometer, einem Matrix-unterstützten Laserdesorptions/Ionisations-Flugzeit-Massenspektrometer, einem Massenspektrometer vom magnetischen Sektortyp und einem Tandem-Quadrupol-Massenspektrometer besteht.

9. Verfahren nach einem der vorstehenden Ansprüche, wobei die Probe aus einem Testsubjekt stammt, das in mindestens einem Zustand ist oder befürchtet in mindestens einem Zustand ist, der aus der Gruppe ausgewählt ist, die aus einer Leberkrankheit, Nierenkrankheit, Diabetes, Rheumatismus, Enzephalopathie, Schwindel, Alterung, oxidativem Stress, einer Herzkrankheit oder einer Lungenkrankheit besteht.

10. Verfahren zum Analysieren von Blut oder Plasma aus einem Testsubjekt, das mindestens in einem Zustand oder befürchtet in mindestens einem Zustand ist, der aus der Gruppe ausgewählt ist, die aus einer Leberkrankheit, Nierenkrankheit, Diabetes, Rheumatismus, Enzephalopatie, Schwindel, Alterung, oxidativem Stress, einer Herzkrankheit oder einer Lungenkrankheit besteht, welches das Analysieren der Menge an reduziertem Albumin und oxidiertem Albumin und/oder des Verhältnisses von reduziertem Albumin und oxidiertem Albumin in aus dem Testsubjekt entnommenem Blut oder Plasma durch das Verfahren nach einem der Ansprüche 1 bis 8 umfasst.

11. Verfahren zum Screenen einer Testsubstanz, welches das Messen der Menge an reduziertem Albumin und oxidiertem Albumin und/ oder des Verhältnisses von reduziertem Albumin und oxidiertem Albumin in einer Probe eines Testsubjekts mit oder ohne Verabreichung einer Testsubstanz durch das Verfahren nach einem der Ansprüche 1 bis 8, das Vergleichen der Menge und/oder des Verhältnisses, das mit Verabreichung einer Testsubstanz erhalten wurde mit der Menge und/oder dem Verhältnis, das ohne Verabreichung einer Testsubstanz erhalten wurde, und das Auswählen einer Probe umfasst, die eine größere Menge und/oder größeres Verhältnis von reduziertem Albumin bei Verabreichung der Testsubstanz im Vergleich zu deren Nichtverabreichung zeigt.

12. Verfahren nach Anspruch 11, wobei die Testsubstanz ein Antioxidans ist.

## Revendications

1. Procédé d'analyse de la quantité d'albumine réduite et d'albumine oxydée et/ou du taux de présence d'albumine réduite et d'albumine oxydée dans un échantillon de sang ou de plasma provenant d'un sujet d'essai, le procédé comprenant la dilution de l'échantillon 50 à 100 000 fois avec un tampon, pour obtenir ainsi une solution d'échantillon ayant un pH de 4-9 et la soumission de la solution à une spectrométrie de masse ou une chromatographie en phase liquide.

2. Procédé selon la revendication 1, qui comprend l'incubation de la solution d'échantillon pendant 0-100 h, l'ajustement de son pH et la soumission de la solution d'échantillon diluée à une spectrométrie de masse ou chromatographie en phase liquide.

3. Procédé selon la revendication 1 ou la revendication 2, dans lequel le tampon est au moins d'un type choisi dans le groupe constitué par un tampon phosphate, un tampon Tris-HCl, un tampon borate, un tampon citrate, un tampon acétate, un tampon carbonate, un tampon HEPES et un tampon succinate.

4. Procédé selon la revendication 2, dans lequel la température d'incubation est de 4-60°C.

5. Procédé selon l'une quelconque des revendications 1 à 4, qui comprend un traitement d'ultrafiltration avant la spectrométrie de masse ou la chromatographie en phase liquide.

6. Procédé selon l'une quelconque des revendications 1 à 5, qui comprend une purification par chromatographie avant la spectrométrie de masse ou la chromatographie en phase liquide.

7. Procédé selon la revendication 6, dans lequel la chromatographie est au moins d'un type choisi dans le groupe constitué par la chromatographie en phase liquide haute performance, la chromatographie en phase inverse, la chromatographie en phase normale, la chromatographie d'affinité, la chromatographie à échange d'ions, la chromatographie par filtration sur gel, et la chromatographie hydrophobe.

8. Procédé selon l'une quelconque des revendications 1 à 7, dans lequel la spectrométrie de masse est effectuée à l'aide d'au moins un type d'appareil choisi dans le groupe constitué par un spectromètre de masse à temps de vol par ionisation par électronébulisation, un spectromètre de masse quadripolaire, un spectromètre de masse à piège ionique, un spectromètre de masse à résonance cyclotronique ionique par transformée de Fourier, un spectromètre de masse à temps de vol par désorptionionisation laser assistée par matrice, un spectromètre de masse de type à secteur magnétique et un spectromètre de masse quadripolaire en tandem.

9. Procédé selon l'une quelconque des revendications précédentes, dans lequel l'échantillon provient d'un sujet d'essai ayant au moins une condition pathologique ou suspecté d'avoir au moins une condition pathologique choisie dans le groupe constitué par une maladie hépatique, une maladie rénale, le diabète, le rhumatisme, l'encéphalopathie, la fatigue, le vieillissement, le stress oxydatif, une maladie cardiaque et une maladie pulmonaire.

10. Procédé d'analyse du sang ou du plasma provenant d'un sujet d'essai dans au moins une condition pathologique ou suspecté d'être dans au moins une condition pathologique choisie dans le groupe constitué par une maladie hépatique, une maladie rénale, le diabète, le rhumatisme, l'encéphalopathie, la fatigue, le vieillissement, le stress oxydatif, une maladie cardiaque et une maladie pulmonaire, qui comprend l'analyse, par le procédé selon l'une quelconque des revendications 1 à 8, de la quantité d'albumine réduite et d'albumine oxydée et/ou du taux de présence d'albumine réduite et d'albumine oxydée dans le sang ou le plasma provenant du sujet d'essai.

11. Procédé de criblage d'une substance d'essai, comprenant
la mesure, par le procédé selon l'une quelconque des revendications 1 à 8, de la quantité d'albumine réduite et d'albumine oxydée et/ou du taux de présence d'albumine réduite et d'albumine oxydée dans un échantillon provenant d'un sujet d'essai avec ou sans administration d'une substance d'essai,
la comparaison de la quantité et/ou du taux de présence obtenu(e) avec administration d'une substance d'essai et de la quantité et/ou du taux de présence obtenu(e) sans administration d'une substance d'essai, et
la sélection de l'échantillon présentant la plus grande quantité et/ou le plus grand taux de présence d'albumine réduite avec administration d'une substance d'essai, comparativement à sa non-administration.

12. Procédé selon la revendication 11, dans lequel la substance d'essai est un antioxydant.
